# EUROPEAN PATENT SPECIFICATION

(11) **EP 1 812 173 B1**
(45) Date of publication and mention of the grant of the patent: **06.02.2008**
(21) Application number: 05789604.5
(22) Date of filing: 05.10.2005
(51) Int. Cl.: B07B 1/38, B07B 1/00

(54) **A SIEVE FRAME**
SIEBRAHMEN
CADRE DE SAS

(30) Priority: 14.10.2004 GB 0422820
(43) Date of publication of application: 01.08.2007
(73) Proprietor: SATAKE CORPORATION, Chiyoda-ku, Tokyo 101-0021 (JP)
(72) Inventor: GLOVER, Charles, Leslie, Failsworth, Manchester M35 9PD (GB)
(74) Representative: Ajello, Michael John
(86) International application number: PCT/GB2005/003824
(87) International publication number: WO 2006/040517

(56) References cited:
- EP-A- 1 145 773
- GB-A- 726 580

## Description

This invention concerns sieve frames and particularly, though not exclusively, such frames of the kind which may be superimposed one above the other in a stack to be placed in an oscillating. Stock to be sifted is fed to the top of the stack and descends in cascade fashion throughout the stack with the "throughs" passing through the sieves for collection while the "overtails" are fed progressively to each successive sieve for further sieving until, at the bottom of the stack, they are discharged for separate collection.

Conventionally, such sieve frames are produced in timber and are precision made by cabinet makers who assemble the frames thus to receive within each frame a loose clothing frame which has a screen of mesh material through which the stock is sieved.

The timber frames must be mounted in superimposed relationship in an aligned stack which is clamped in place to hold the frames together within the sifter, and felt strips are fixed to the upper and lower edges of the frames forming seals between the frames to prevent the escape of stock. The felt seals have a tendency to absorb moisture and to become contaminated with the material of the stock, and after a period of time they tend to flatten and become ineffective in providing an adequate seal between the frames in the stack.

In addition, the conventional frames have no means of perfect vertical alignment in the stack and this problem is exacerbated by the flattening of the felt seals. The consequent relative movement of the sieve frames in use causes excessive wear of the felt seals which thus have to be replaced periodically. From document EP1145773 is known a sifter with the mutually contacting surfaces of frames being provided with arc shaped or inclined seal surfaces.

An object of the present invention is to provide an improved sieve frame which does not require felt seals and which has means whereby a stack of such frames is interlocked to ensure vertical alignment.

According to the present invention there is provided a sieve frame comprising a plurality of side walls, each of said side walls having upper and lower edges at least one of which is adapted to form an interface with a respective edge of a side wall of another such sieve frame in superimposed juxtaposition; characterised in that said at least one edge is defined by at least two angularly displaced faces thus to form, with another such sieve frame side wall, a labyrinth seal.

The sieve frame may be rectangular in plan with four side walls defining between them a void to contain a loose clothing frame.

The upper and lower edges of the side walls may be formed each with at least two angularly displaced faces to form a labyrinth seal all around the frame at both upper and lower edges of the side walls.

The labyrinth seal may be formed by at least four angularly displaced faces.

The labyrinth seal may be formed by at least five angularly displaced faces.

At least one of the angularly displaced faces may be inclined with respect to a top to bottom plane of the respective side wall.

The labyrinth seal may be trapezoidal in cross section.

Each side wall may have male and female labyrinth seals at its upper and lower edges respectively.

The frame may include internal seals of a plastics or silicone material to receive thereon a loose clothing frame.

The labyrinth seals may be formed such as to ensure vertical alignment of a plurality of sieve frames superimposed in a stack.

The side walls may be made from a food-quality plastics material.

The sieve frame may include a plurality of internal supporting members made from a food-quality plastics material.

The food-quality plastics material may be a high density polyethylene.

The sieve frame may include a bed of stainless steel onto which, in use, sieved material is deposited.

An embodiment of the invention will now be described, by way of example only, with reference to the accompanying drawings in which:-
Fig. 1 schematically illustrates a sifter through which stock may be passed to descend in cascade fashion through a stack of sieve frames each having a loose clothing frame supported thereby.
Fig. 2 is a plan view of a sieve frame made in accordance with the invention.
Fig. 3 is a vertical cross section taken on line A-A of Fig. 2.
Fig. 4 is a vertical cross section taken on line B-B of Fig. 2 and
Fig. 5 is an enlarged vertical cross section of a side wall of the sieve frame illustrated in Fig. 2.

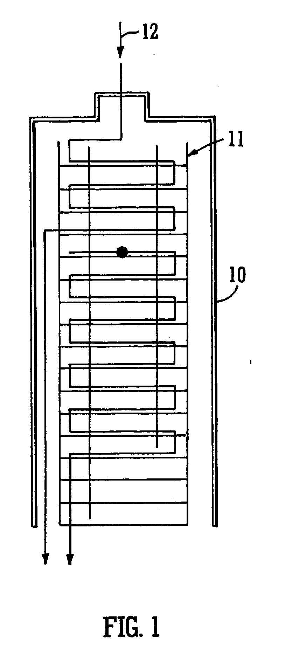

Referring now to Fig. 1, in a typical sifter application, an outer casing 10 which may be mounted, together to several other such casings, in a multiple sifter, contains a plurality of sieve frames in a stack generally indicated at 11. Stock to be sieved is introduced into the casing 10 at its upper end as indicated at 12 and passes, in cascade fashion, to the bottom of the stack to be discharged thereat.

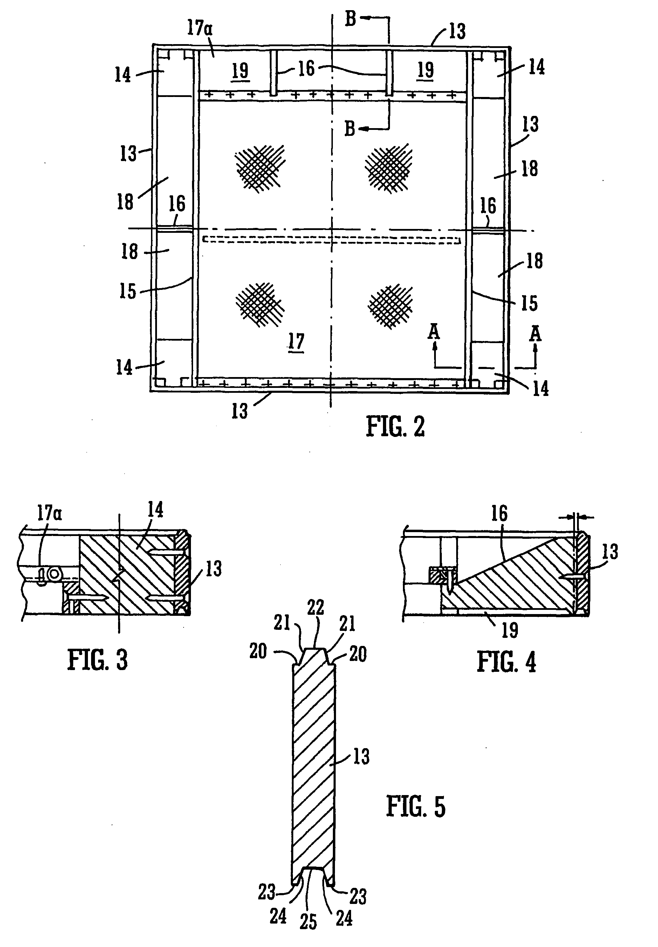

Referring now to Fig. 2 each sieve frame which in this example is rectangular in plan, comprises four side walls 13 fixed together by corner blocks 14 and having a pair of inner supporting walls 15 which together with fillets 16 support a loose clothing frame of the kind typically used in such sifters where the clothing frame comprises a mesh screen 17 beneath which is a coarse metallic mesh (not shown) and on which freely movable cleaning members (not shown) are located which move with the natural movement of the sifter casing to prevent the mesh from becoming blocked.

In this example, stock such as flour, which passes through the mesh 17 is deposited onto a stainless steel bed 17a beneath the coarse metal mesh and from there passes outwardly into discharge chutes 18. Any stock which cannot pass through the mesh 17 is discharged into an outlet passage 19 from where it is fed to the next lower sieve frame in the stack to be passed, once again, over the mesh 17 thereof. As with conventional sieve frames, the outlets 19 are disposed alternately at opposite sides of the stack to ensure that the stock is fed progressively and successively, in cascade fashion, through the stack as illustrated in Fig. 1.

Different arrangements of discharge chutes and apertures may be provided according to the stock being sifted and the sifting operation. Such details are common in sifters and form no part of the present invention.

Referring now to Fig. 5 it will be seen that each side wall 13 has at its upper edge a stepped formation comprising a pair of horizontal flats 20, a pair of 30 inclined faces 21 and a top face 22.

Likewise, the lower edge of the side wall comprises flats 23, inclined faces 24 and a top 25. In this example, the flats and faces 20, 21 and 22, and 23, 24 and 25, form trapezoidal labyrinth seal where the upper and lower edges respectively at each side wall are arranged as male and female seals whereby such sieve frames arranged in a stack become interlocked to prevent relative lateral movement while the edges are sealed against the escape of stock from the stack. The labyrinth seal formed by the multi-faceted edges of the side walls of the frame ensure that the stock cannot escape, and the need for a felt seal or any other additional seal is avoided.

Typically, for a side wall thickness of 10mm, each of the horizontal flats 20 is some 3mm in width while the flat top 22 is some 3.5mm, the incline faces 21 thus each occupying 3.5mm in width.

The female formation at the bottom of each side wall comprises a pair of 1mm wide flats 23 with the top 25 of some 4.5mm and the inclined faces 24 each occupying some 1.75mm in width. The height between the flats 20 and the 22 is 4mm while height of the trapezoidal recess at the bottom edge is 4.5mm. Thus, the angle of each inclined face is approximately 115° from the top to bottom plane of the side wall.

It will be seen therefore that the top flat 22 is 0.5mm narrower than the top flat 25. When two or more sieve frames of this kind are stacked in superimposed relationship, a degree of free but controlled lateral movement is provided between the framed at each interface. The labyrinth seal is effective across at least two faces and preferably across the flats 20 and 23 and across the incline faces 21 and 24. These labyrinth seals therefore are adequate to prevent the escape of stock from the stack, without the need for additional sealing material such as the felt used in conventional sieve frames. The interlock provided by the labyrinth seals enables a stack of such frames to be manoeuvred without the risk of excessive misalignment of the frames during such movement, and thus enabling the complete stack to be introduced into and removed from a sifter without the risk of the stack toppling.

The side walls 13, corner blocks 14, internal walls 15 and fillets 16 are all made from a food-quality plastics material such as high density polyethylene having a shore hardness sufficient to allow very slight resilience in the surfaces and edges of the frame thus avoiding the creation of sharp edges or points which may cause injury.

Such material is biologically and chemically inert to an extent sufficient for the application and the nature of material to be sifted. The inner walls 15 may be provided with sealing strips of a plastics or silicone material upon which the loose clothing frame may rest, again to prevent the escape of stock from between the sieve frame and the loose clothing frame.

Various additional advantages accrue from the provision of a sieve frame made in accordance with the invention, being predominantly of food-quality plastics material with labyrinth seals and physical interlocks between the frames. In particular, such a frame is expected to have a longer life in view of the inert nature of the material and the ability to remain both clean and hygienically sound for an extended period. The high density polyethylene material of the frame does not permit flour or other stock to adhere thereto and has no static electrical effect. The material will withstand pressure washing as opposed to the timber and felt used in conventional frames which cannot be so readily washed, and there are no readily worn materials such as felt which could become worn or contaminated.

## Claims

1. A sieve frame comprising a plurality of side walls each of said side walls having upper and lower edges at least one of which is adapted to form an interface with a respective edge of a side wall of another such sieve frame in superimposed juxtaposition;
**characterised in that** said at least one edge is defined by at least two angularly displaced faces thus to form with another such sieve frame side wall, a labyrinth seal.

2. A sieve frame according to claim 1 which is rectangular in plan with four side walls defining between them a void to contain a loose clothing frame.

3. A sieve frame according to claim 1 or claim 2 wherein the upper and lower edges of the side walls are formed each with at least two angularly displaced faces to form a labyrinth seal all around the frame at both upper and lower edges of the side wall.

4. A sieve frame according to any preceding claim wherein the labyrinth seal is formed by at least four angularly displaced faces.

5. A sieve frame according to any preceding claim wherein the labyrinth seal is formed by at least five angularly displaced faces.

6. A sieve frame according to any preceding claim wherein at least one of the angularly displaced faces is inclined with respect to a top to bottom plane of the respective side wall.

7. A sieve frame according to claim 4 wherein the labyrinth seal is trapezoidal in cross section.

8. A sieve frame according to any preceding claim wherein each side wall has male and female labyrinth seals at its upper and lower edges respectively.

9. A sieve frame according to any preceding claim including internal seals of a plastics or silicone material to receive thereon a loose clothing frame.

10. A sieve frame according to any preceding claim wherein the labyrinth seals are formed such as to ensure vertical alignment of a plurality of sieve frames superimposed in a stack.

11. A sieve frame according to any preceding claim wherein the side walls are made from a food-quality plastics material.

12. A sieve frame according to claim 11 including a plurality of internal supporting members made from a food-quality plastics material.

13. A sieve frame according to claim 11 or claim 12 wherein the food-quality plastics material is a high density polyethylene.

14. A sieve frame according to any preceding claim including a bed of stainless steel onto which, in use, sieved material is deposited.

15. A sifter including at least one stack of sieve frames according to any preceding claim.

## Patentansprüche

1. Siebrahmen mit mehreren Seitenwänden, wobei jede Seitenwand einen oberen und einen unteren Rand hat, von denen wenigstens einer dafür ausgebildet ist, eine Grenzfläche mit einem Rand einer Seitenwand eines weiteren derartigen Siebrahmens in überlagerter und angrenzender Position zu bilden,
**dadurch gekennzeichnet, dass** der wenigstens eine Rand durch wenigstens zwei abgewinkelte Flächen gebildet ist, um so mit einer weiteren derartigen Siebrahmenseitenwand eine Labyrinthdichtung zu bilden.

2. Siebrahmen nach Anspruch 1, der in Draufsicht rechteckig ist, wobei vier Seitenwände zwischen sich einen Hohlraum zum Aufnehmen eines losen Geweberahmens begrenzen.

3. Siebrahmen nach Anspruch 1 oder 2, wobei die oberen und unteren Ränder der Seitenwände jeweils mit zwei abgewinkelten Flächen ausgebildet sind, um eine Labyrinthdichtung um den ganzen Rahmen herum sowohl an dem oberen als auch an dem unteren Rand der Seitenwand zu bilden.

4. Siebrahmen nach einem der vorhergehenden Ansprüche, wobei die Labyrinthdichtung durch wenigstens vier abgewinkelte Flächen gebildet ist.

5. Siebrahmen nach einem der vorhergehenden Ansprüche, wobei die Labyrinthdichtung durch wenigstens fünf abgewinkelte Flächen gebildet ist.

6. Siebrahmen nach einem der vorhergehenden Ansprüche, wobei wenigstens eine der abgewinkelten Flächen gegen eine sich von oben nach unten erstreckende Ebene der betreffenden Seitenwand geneigt ist.

7. Siebrahmen nach Anspruch 4, wobei die Labyrinthdichtung im Querschnitt trapezförmig ist.

8. Siebrahmen nach einem der vorhergehenden Ansprüche, wobei jede Seitenwand eine Positiv- und eine Negativlabyrinthdichtung an ihrem oberen bzw. unteren Rand hat.

9. Siebrahmen nach einem der vorhergehenden Ansprüche, mit internen Dichtungen aus einem Kunststoff- oder Silikonmaterial, auf die ein loser Geweberahmen aufbringbar ist.

10. Siebrahmen nach einem der vorhergehenden Ansprüche, wobei die Labyrinthdichtungen so ausgebildet sind, dass eine vertikale Ausrichtung von mehreren Siebrahmen, die in einem Stapel übereinander angeordnet sind, gewährleistet ist.

11. Siebrahmen nach einem der vorhergehenden Ansprüche, wobei die Seitenwände aus einem Kunststoff von Lebensmittelqualität hergestellt sind.

12. Siebrahmen nach Anspruch 11, mit mehreren internen Tragteilen, die aus einem Kunststoff von Lebensmittelqualität hergestellt sind.

13. Siebrahmen nach Anspruch 11 oder 12, wobei das Kunststoffmaterial von Lebensmittelqualität ein hochdichtes Polyethylen ist.

14. Siebrahmen nach einem der vorhergehenden Ansprüche, mit einem Bett aus rostfreiem Stahl, auf dem im Gebrauch gesiebtes Material abgelagert wird.

15. Siebvorrichtung mit wenigstens einem Stapel von Siebrahmen nach einem der vorhergehenden Ansprüche.

## Revendications

1. Cadre de tamis comprenant une pluralité de parois latérales, chacune desdites parois latérales présentant des bords supérieur et inférieur dont au moins l'un d'entre eux est adapté pour former une interface avec un bord respectif d'une paroi latérale d'un autre cadre de tamis de ce type dans une juxtaposition superposée ;
**caractérisé en ce que** ledit au moins un bord est défini par au moins deux faces angulairement déplacées pour former ainsi avec une autre paroi latérale de cadre de tamis un joint labyrinthe.

2. Cadre de tamis selon la revendication 1 qui est rectangulaire en plan avec quatre parois latérales définissant entre elles un vide pour contenir un cadre d'habillage lâche.

3. Cadre de tamis selon la revendication 1 ou la revendication 2 dans lequel les bords supérieur et inférieur des parois latérales sont formés chacun avec au moins deux faces déplacées angulairement pour former un joint labyrinthe tout autour du cadre au niveau des deux bords supérieur et inférieur de la paroi latérale.

4. Cadre de tamis selon l'une quelconque des revendications précédentes dans lequel le joint labyrinthe est formé par au moins quatre faces déplacées angulairement.

5. Cadre de tamis selon l'une quelconque des revendications précédentes dans lequel le joint labyrinthe est formé par au moins cinq faces angulairement déplacées.

6. Cadre de tamis selon l'une quelconque des revendications précédentes dans lequel au moins une des faces déplacées angulairement est inclinée par rapport à un plan de haut en bas de la paroi latérale respective.

7. Cadre de tamis selon la revendication 4 dans lequel le joint labyrinthe est trapézoïdal en section transversale.

8. Cadre de tamis selon l'une quelconque des revendications précédentes dans lequel chaque paroi latérale présente des joints labyrinthe mâle et femelle au niveau de ses bords supérieur et inférieur respectivement.

9. Cadre de tamis selon l'une quelconque des revendications précédentes comportant des joints internes en matériau plastique ou silicone pour recevoir dessus un cadre d'habillage lâche.

10. Cadre de tamis selon l'une quelconque des revendications précédentes dans lequel les joints labyrinthe sont formés de manière à garantir l'alignement vertical d'une pluralité de cadres de tamis superposés dans une pile.

11. Cadre de tamis selon l'une quelconque des revendications précédentes dans lequel les parois latérales sont fabriquées à partir d'une matière plastique de qualité alimentaire.

12. Cadre de tamis selon la revendication 11 comportant une pluralité d'éléments de support internes fabriqués à partir d'une matière plastique de qualité alimentaire.

13. Cadre de tamis selon la revendication 11 ou la revendication 12 dans lequel la matière plastique de qualité alimentaire est un polyéthylène haute densité.

14. Cadre de tamis selon l'une quelconque des revendications précédentes comportant un bâti d'acier inoxydable sur lequel, lors d'une utilisation, le matériau tamisé est déposé.

15. Bluterie comportant au moins une pile de cadres de tamis selon l'une quelconque des revendications précédentes.
